# EUROPÄISCHE PATENTANMELDUNG

(11) **EP 1 967 159 A1**
(43) Veröffentlichungstag der Anmeldung: **10.09.2008**
(21) Anmeldenummer: 07004840.0
(22) Anmeldetag: 09.03.2007
(51) Int. Cl.: A61C 11/02

(54) **Artikulator**

(71) Anmelder: Franz Sachs GmbH & Co. KG, 88069 Tettnang (DE)
(72) Erfinder: Woidschützke, Horst, 88339 Wangen (DE)
(74) Vertreter: Engelhardt, Guido

(57) **Zusammenfassung**

Bei einem Artikulator (1), mittels dem Demonstrationsbewegungen eines Unterkiefermodells (8) vornehmbar sind und der aus einem zweiteiligen Traggestell (2) besteht, an dessen ortsfesten Oberteil (3) ein Oberkiefermodell (7) und an dessen um eine horizontal verlaufende Achse (Welle 5) begrenzt verschwenkbaren Unterteil (4) das Unterkiefermodell (8) befestigt sind, ist das Unterkiefermodell (8) über ein Zwischenstück (11) an dem Unterteil (4) des Traggestells (2) abgestützt und das Zwischenstück (11) ist drehbar an dem Unterteil (4) gelagert. Durch diese Ausgestaltung ist es möglich, an dem Artikulator (1) unterschiedliche Kiefermodelle ohne Schwierigkeiten an dem Oberteil (3) und dem Unterteil zu befestigen, ohne dass Bearbeitungen vorzunehmen oder Fachkenntisse erforderlich sind. Außerdem können die beiden Kiefermodelle (7 und 8) problemlos zueinander ausgerichtet werden.

## Beschreibung

Die Erfindung bezieht sich auf einen Artikulator, mittels dem Demonstrationsbewegungen eines Unterkiefermodells vornehmbar sind und der aus einem auf einer Platte oder einem Stativ befestigten zweiteiligen Traggestell besteht, an dessen ortsfestem Oberteil ein Oberkiefermodell und an dessen gegenüber dem Oberteil um eine horizontal verlaufende Achse begrenzt verschwenkbaren Unterteil das Unterkiefermodell befestigt sind.

Demonstrationsartikulatoren, die einfache Funktionsbewegungen des Unterkiefers erlauben, werden von der Firma frasaco GmbH, Oberhofer Straße 18, 88069 Tettnang, unter der Bezeichnung "AG-3 DA" angeboten und haben sich in der Praxis auch bewährt. Die Kiefermodelle sind hierbei fest an dem Oberteil und an dem Unterteil des Traggestells angeschraubt und müssen jeweils auf dieses abgestimmt werden. Bei einer eventuellen Beschädigung eines Kiefermodells ist somit ein Austausch nicht ohne Weiteres möglich, vielmehr müssen die aus Kunststoff bestehenden Kiefermodelle und/oder das Traggestell an den Anlageflächen bearbeitet werden, um eine Anpassung an das Gegenstück vorzunehmen. Dies ist mitunter sehr zeitaufwendig und von einem Benutzer des Artikulators nicht zu bewerkstelligen, so dass vielfach auf eine Reparatur verzichtet wird. Des Weiteren ist von Nachteil, dass keine Verstellmöglichkeit der Kiefermodelle zueinander gegeben ist und dass keine unterschiedlichen Kiefermodelle verwendet werden können. Der Einsatzbereich des Demonstrationsartikulators ist demnach begrenzt.

Aufgabe der Erfindung ist es daher, einen Artikulator der vorgenannten Art in der Weise auszugestalten, dass nicht nur unterschiedliche Kiefermodelle ohne Schwierigkeiten an dem Oberteil und/oder dem Unterteil des Traggestells zu befestigen sind, sondern dass vor allem ein Austausch, ohne dass Bearbeitungen vorzunehmen oder dass Fachkenntnisse erforderlich sind, leicht und in kurzer Zeit zu bewerkstelligen ist. Des Weiteren soll erreicht werden, dass die beiden Kiefermodelle problemlos zueinander auszurichten sind, so dass eine vielseitige Verwendbarkeit bei einfacher Handhabung gegeben ist.

Gemäß der Erfindung wird dies bei einem Artikulator der eingangs genannten Gattung dadurch erreicht, dass das Unterkiefermodell über ein Zwischenstück an dem Unterteil des Traggestells abgestützt ist und dass das Zwischenstück drehbar in dem Unterteil gelagert ist.

Zweckmäßig ist es hierbei, das Unterteil des Traggestells aus zwei über Querstreben mit seitlichem Abstand zueinander angeordneten Wangen herzustellen, zwischen denen das Oberteil eingesetzt ist, und die beiden Wangen des Unterteils in dem dem Unterkiefermodell abgewandten Endbereich auf einer das Oberteil durchgreifenden Welle verschwenkbar zu lagern.

Die beiden Wangen des Unterteils sollten dazu in dem dem Unterkiefermodell zugewandten Endbereich jeweils mit einer Aufnahmeöffnung für eine das Zwischenstück durchgreifenden Welle versehen sein, wobei die Aufnahmeöffnungen der beiden Wangen, um den Verstellbereich zu erhöhen, als zylindrische Bohrungen, als geschlossene oder einseitig offene Langlöcher oder als geschlossene oder offene Kurve ausgebildet sein können.

Das Zwischenstück sollte aus einer Tragplatte und jeweils zwei in deren Endbereichen von dieser abstehenden mit seitlichem Abstand zueinander angeordneten Schenkeln bestehen, zwischen denen die Wangen des Unterteils des Traggestells einsetzbar sind.

Das Oberteil des Traggestells kann ebenfalls in einfacher Ausgestaltung aus einem rechteckig gestalteten Tragrahmen bestehen, dessen dem Oberkiefermodell zugewandter Endbereich als Adapter ausgebildet ist.

Um das Auswechseln zu erleichtern, sollten die Tragplatten des Zwischenstückes und/oder der Adapter des Oberteils des Traggestells jeweils mit Haltern z. B. in Form von schwalbenschwanzartig ausgebildeten Ansätzen zur Aufnahme des Unterkiefermodells und/oder des Oberkiefermodells, mit Druckknöpfen od. dgl. versehen sein, wobei der Verstellbereich der Halter jeweils durch einen den Endstellungen der Ober- und/oder Unterkiefermodelle zugeordneten Anschlag begrenzt sein sollte.

Das Oberkiefermodell und/oder das Unterkiefermodell können an einem winkelförmigen Bügel befestigt oder in einer Schale eingesetzt sein, die an dem Oberteil, an dessen Adapter oder an einem mit diesem verbundenen Ansatzstück bzw. dem Zwischenstück des Unterteils des Traggestells abgestützt sind oder das Oberkiefermodell und/oder das Unterkiefermodell kann unmittelbar an dem Oberkiefer bzw. dem Zwischenstück des Unterteils angebracht sein.

Wird ein Artikulator gemäß der Erfindung ausgebildet, so ist es auf einfache Weise möglich, sowohl Oberkiefermodelle als auch Unterkiefermodelle bei einer eventuellen Beschädigung in kurzer Zeit auszuwechseln, ohne dass das Traggestell und/oder die Kiefermodelle bearbeitet werden müssen. Durch die drehbare Lagerung des das Unterkiefermodell aufnehmenden Zwischenstückes ist es nämlich möglich, das Unterkiefermodell ohne Schwierigkeiten auf das Oberkiefermodell auszurichten, ein Austausch ist somit problemlos vorzunehmen.

Des Weiteren ist von Vorteil, dass nachträglich auch unterschiedlich ausgebildete Kiefermodelle an dem Ober- und/oder Unterteil des Traggestells angebracht werden können. Aufgrund der verdrehbaren Lagerung in Verbindung mit der Verschwenkbarkeit des Unterteils ist es nämlich möglich, unterschiedliche Zahn- und Modellhöhen auszugleichen. Und da die Kiefermodelle leicht von den diese tragenden Bauteilen abnehmbar bzw. auf diese aufrastbar sind, ist bei einfacher Handhabung eine langfristige Verwendbarkeit des vorschlagsgemäß ausgebildeten Artikulators gegeben.

In der Zeichnung ist ein Ausführungsbeispiel eines gemäß der Erfindung ausgebildeten Demonstrationsartikulatoren dargestellt, das nachfolgend im Einzelnen erläutert ist. Hierbei zeigen:
- Figur 1: den aus einem zweiteiligen Traggestell bestehenden Artikulator mit an diesem angebrachten Kiefermodellen, in einer perspektivischen Darstellung,
- Figur 2: den Artikulator nach Figur 1, ohne die beiden Kiefermodelle,
- Figur 3: das Traggestell des Artikulators nach Figur 1, in einer Seitenansicht,
- Figuren 3a und 3b: jeweils einen Ausschnitt aus Figur 3 mit unterschiedlich ausgebildeten Aufnahmeöffnungen,
- Figur 3c: das bei dem Artikulator nach Figur 1 verwendete Zwischenstück, in einer Schnittdarstellung,
- Figur 4: den Artikulator nach Figur 2 mit angeschraubten winkelförmigen Bügeln zur Halterung der Kiefermodelle,
- Figur 5: den Artikulator gemäß Figur 4 in einer Ausführungsvarianten,
- Figur 6: den Artikulator nach Figur 2 mit Schalen zur Aufnahme der Kiefermodelle und
- Figur 6a: einen Ausschnitt aus Figur 6, in einer vergrößerten Wiedergabe.

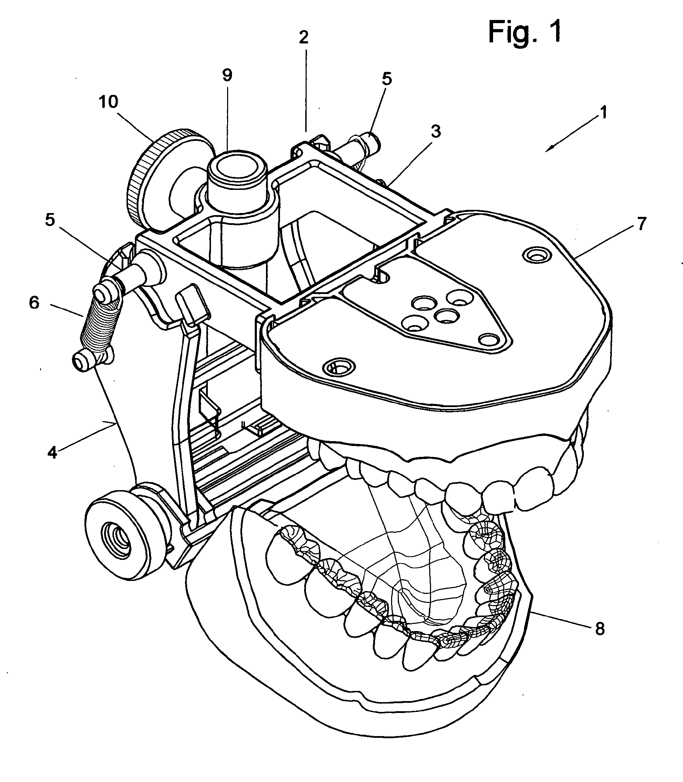

Der in den Figuren 1 bis 6 dargestellte und jeweils mit 1 bezeichnete Artikulator dient dazu, Demonstrationsbewegungen eines Unterkiefermodells 8 vornehmen zu können, und besteht im Wesentlichen aus einem zweiteiligen Traggestell 2, an dem ein Oberkiefermodell 7 an einem Oberteil 3 und das Unterkiefermodell 8 an einem Unterteil 4 unmittelbar oder über Zwischenglieder gehalten sind. Das Unterteil 4 des Traggestells 2 ist um eine durch in dessen Oberteil 3 eingesetzte Bolzen 5 gebildete Achse entgegen der Kraft zweier Rückstellfedern 6 verschwenkbar. Mit Hilfe einer in das Oberteil 3 eingesetzten Hülse 9 ist der Artikulator 1 auf einem Stativ aufsteckbar und auf diesem mittels einer Stellschraube 10 arretierbar.

Um das Unterkiefermodell 8 bei der Bestückung des Artikulators 1 oder gegebenenfalls bei einem Austausch leicht auf das ortsfest an dem Oberteil 3 des Traggestells 2 abgestützten Oberkiefermodells 7 ausrichten und an dieses anpassen zu können, ist das Unterkiefermodell 8 mit Hilfe eines Zwischenstückes 11 verdrehbar an dem Unterteil 4 gelagert. Das Zwischenstück 11 besteht dazu aus einer Tragplatte 12 und in deren beiden Endbereichen jeweils paarweise von dieser mit seitlichem Abstand zueinander abstehenden Stegen 13 und 14, zwischen denen durch Querstreben 23 verbundene Wangen 21 bzw. 22, aus denen das Unterteil 3 gebildet ist, eingreifen. In das Zwischenstück 11 ist eine Durchgangsbohrung 15 eingearbeitet und die Wangen 21 und 22 sind mit Aufnahmeöffnungen 24, 24' bzw. 24" versehen, in denen eine Welle 16 drehbar gelagert ist. Auf durch die Enden der Welle 16 aufgeschraubte Muttern 19 ist das Zwischenstück 11 zwischen den Wangen 21 und 22 arretiert.

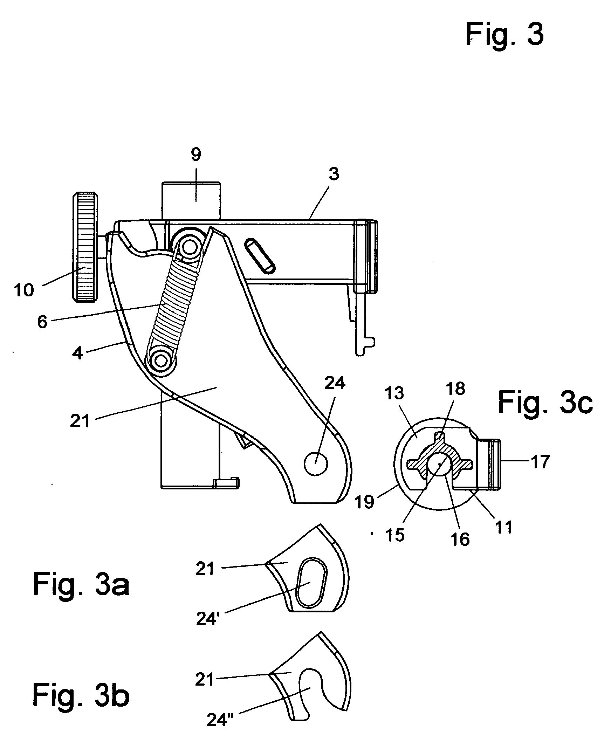

Zur lösbaren Befestigung des Unterkiefermodells 4 ist die Tragplatte 12 mit Ansatzstücken 17, die in Form von Schwalbenschwanzführungen ausgebildet sind, versehen. Außerdem sind, wie dies insbesondere der Figur 3c zu entnehmen ist, an dem Zwischenstück 11 mehrere Versteifungsstege 18 angeformt. Und um den Verstellbereich des Unterkiefermodells 4 zu erhöhen, sind die in den Wangen 21 und 22 eingearbeiteten Aufnahmeöffnungen 24 unterschiedlich gestaltet. Gemäß Figur 3 sind die Aufnahmeöffnungen 24 als zylindrische Bohrungen ausgebildet, nach den Figuren 3a und 3b jedoch als Langloch 24' bzw. als offene Kurve 24", so dass auch ein geringer axialer Versatz des Unterkiefermodells 4 ausgeglichen werden kann.

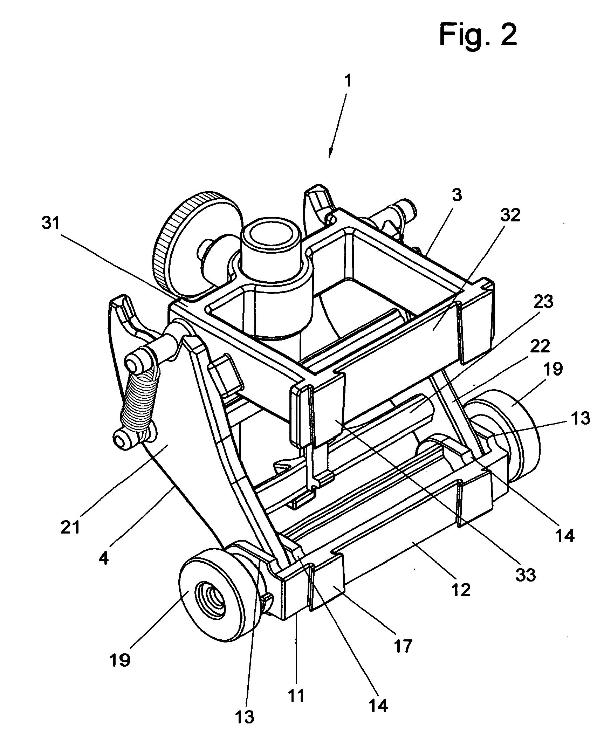

Das Oberteil 3 des Traggestells 2 ist, wie dies u.a. der Figur 2 zu entnehmen ist, als rechteckiger Tragrahmen 31 gestaltet, dessen dem Oberkiefermodell 7 zugekehrte Seite als Adapter 32 ausgebildet ist, an dem ebenfalls schwalbenschwanzförmig ausgebildete Ansatzstücke 33 angeformt sind. Auf die Ansatzstücke 17 bzw. 33 des Ansatzstückes 11 bzw. des Adapters 32 können somit, wie dies in Figur 1 gezeigt ist, das Oberkiefermodell 7 und das Unterkiefermodell 8 unmittelbar aufgesteckt werden.

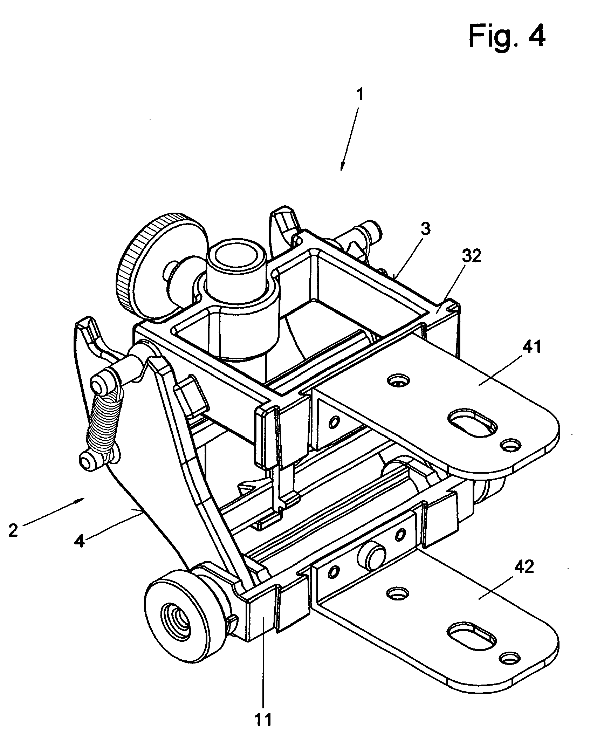

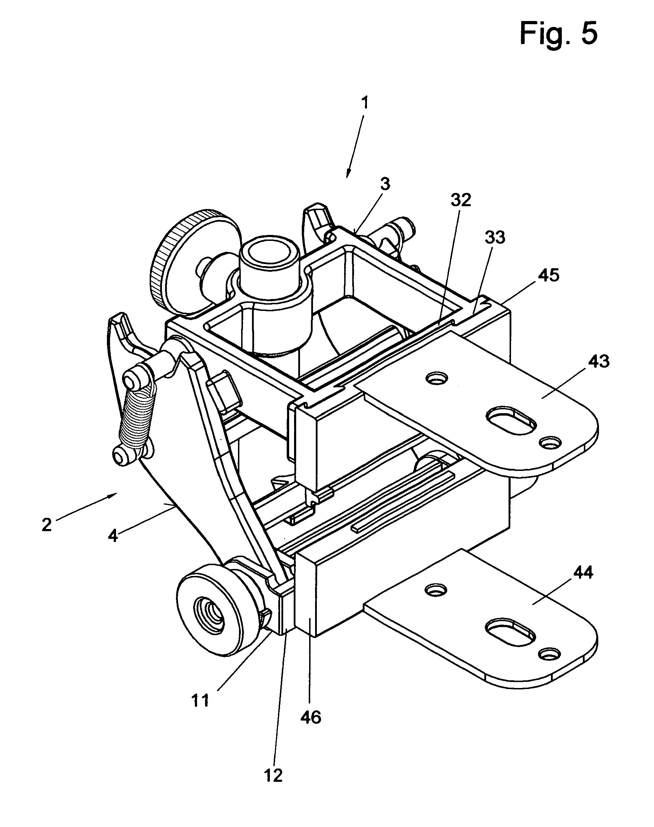

Gemäß Figur 4 kann an den Adapter 32 bzw. das Zwischenstück 11 jeweils auch ein Bügel 41 bzw. 42 angeschraubt werden, an denen wiederum das Oberkiefermodell 7 bzw. das Unterkiefermodell 8 befestigt werden kann. Nach Figur 5 können Bügel 43 bzw. 44 aber auch an Ansatzstücken 45 bzw. 46 angebracht sein, die auf dem Adapter 32 bzw. dem Zwischenstück 11 aufgerastet sind.

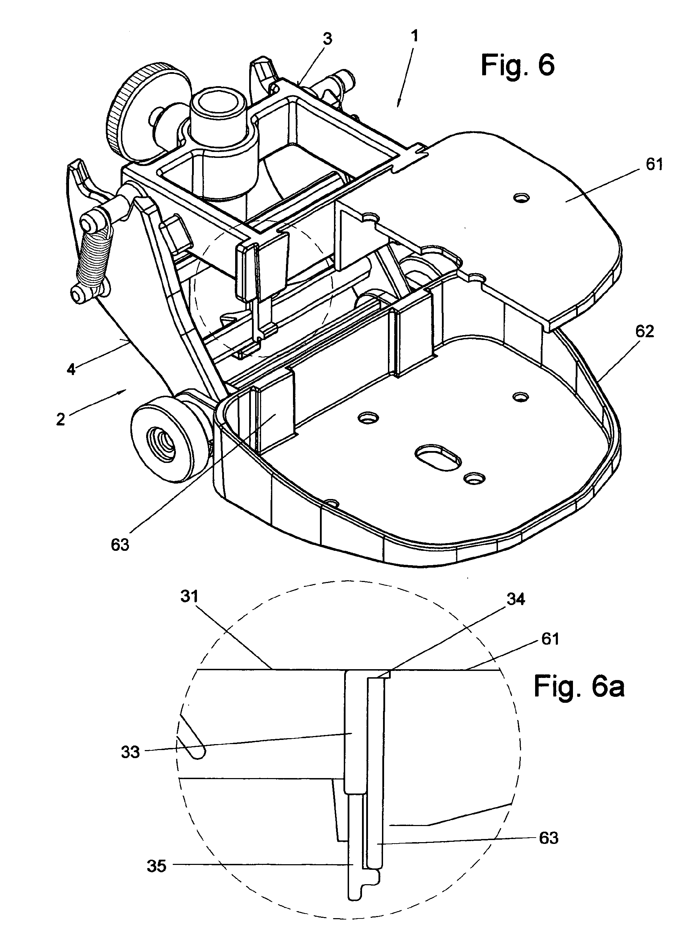

Das Oberkiefermodell 7 und das Unterkiefermodell 8 können aber auch, wie dies in Figur 6 gezeigt ist, in Schalen 61 bzw. 62 eingesetzt werden, die an dem Adapter 32 des Oberteils 3 bzw. dem Zwischenstück 11 lösbar befestigt sind. Die Schalen 61 und 62 sind dazu mit entsprechenden an die Ansatzstücke 17 bzw. 33 angepasste Aufnahmen 63 versehen.

Die Ansatzstücke 17 bzw. 33 sind, wie dies in Figur 6a in vergrößertem Maßstab wiedergegeben ist, jeweils mit einem Anschlag 34 ausgestattet, um den Verstellweg der in diese eingreifenden Bauteile, beispielsweise der Aufnahmen 63, in vertikaler Richtung zu begrenzen. Und damit gemäß Figur 6a die Schale 61 nicht abrutschen kann, ist an dem Ansatzstück 33 ein federnder Steg 35 angeformt, der die Aufnahme 63 der Schale und/oder das Modell 61 hintergreift.

Mit allen dargestellten Ausführungsvarianten des Artikulators 1 ist es möglich, das an dem Unterteil 4 des Traggestells 2 abgestützte Unterkiefermodell 8 auf das an dem ortsfesten Oberteil 4 angebrachte Oberkiefermodells 7 auszurichten, und zwar sowohl in den Ebenen zueinander als auch begrenzt in axialer Richtung. Übungen zur präventiven, konservierenden und prothetischen Zahnheilkunde können somit unter Berücksichtigung funktioneller Okklusionsbeziehungen leicht ausgeführt werden.

## Patentansprüche

1. Artikulator (1), mittels dem Demonstrationsbewegungen eines Unterkiefermodells (8) vornehmbar sind und der aus einem auf einer Platte oder einem Stativ befestigten zweiteiligen Traggestell (2) besteht, an dessen ortsfestem Oberteil (3) ein Oberkiefermodell (7) und an dessen gegenüber dem Oberteil (3) um eine horizontal verlaufende Achse (Welle 5) begrenzt verschwenkbaren Unterteil (4) das Unterkiefermodell (8) befestigt sind,
**dadurch gekennzeichnet,**
**dass** das Unterkiefermodell (8) über ein Zwischenstück (11) an dem Unterteil (4) des Drahtgestells abgestützt ist und dass das Zwischenstück (11) drehbar in dem Unterteil (4) gelagert ist.

2. Artikulator nach Anspruch 1,
**dadurch gekennzeichnet,**
**dass** das Unterteil (4) des Traggestells (2) aus zwei über Querstreben (3) mit seitlichem Abstand zueinander angeordneten Wangen (21, 22) besteht, zwischen denen das Oberteil (3) eingesetzt ist.

3. Artikulator nach Anspruch 1 oder 2,
**dadurch gekennzeichnet,**
**dass** die beiden Wangen (21, 22) des Unterteils (4) n dem dem Unterkiefermodell (8) abgewandten Endbereich auf einer das Oberteil (3) durchgreifenden Welle (5) verschwenkbar gelagert sind.

4. Artikulator nach Anspruch 2 oder 3,
**dadurch gekennzeichnet,**
**dass** die beiden Wangen (21, 22) des Unterteils (4) in dem dem Unterkiefermodell (8) zugewandten Endbereich jeweils mit einer Aufnahmeöffnung (24, 24', 24") für eine das Zwischenstück (11) durchgreifenden Welle (16) versehen sind.

5. Artikulator nach Anspruch 4,
**dadurch gekennzeichnet,**
**dass** die Aufnahmeöffnungen der beiden Wangen (21, 22) als zylindrische Bohrungen (24), als geschlossene oder einseitig offene Langlöcher (24') oder als geschlossene oder offene Kurven (24") ausgebildet sind.

6. Artikulator nach Anspruch 1 bis 5,
**dadurch gekennzeichnet,**
**dass** das Zwischenstück (11) aus einer Tragplatte (12) und jeweils zwei in deren Endbereichen von dieser abstehenden mit seitlichem Abstand zueinander angeordneten Schenkel (13, 14) besteht, zwischen denen die Wangen (21, 22) des Unterteils (4) des Traggestells (2) einsetzbar sind.

7. Artikulator nach einem oder mehreren der Ansprüche 1 bis 6,
**dadurch gekennzeichnet,**
**dass** das Oberteil (3) des Traggestells (2) aus einem rechteckig gestalteten Tragrahmen (31) besteht, dessen dem Oberkiefermodell (7) zugewandte Endbereich als Adapter (32) ausgebildet ist.

8. Artikulator nach Anspruch 6 oder 7,
**dadurch gekennzeichnet,**
**dass** die Tragplatte (12) des Zwischenstückes (11) und/oder der Adapter (32) des Tragrahmens (31) des Oberteils (3) jeweils mit Haltern z. B. in Form von schwalbenschwanzartig ausgebildeten Ansätzen (17 bzw. 33), mit Druckknöpfen oder dergleichen zur Aufnahme des Unterkiefermodells (8) und/oder des Oberkiefermodells (7) versehen sind.

9. Artikulator nach Anspruch 8,
**dadurch gekennzeichnet,**
**dass** der Verstellbereich der Ansätze (17, 13) jeweils durch einen den Endstellungen der Ober- und/oder Unterkiefermodelle (7 bzw. 8) zugeordneten Anschlag (34, 35) begrenzt ist.

10. Artikulator nach Anspruch 1 bis 9,
**dadurch gekennzeichnet,**
**dass** das Oberkiefermodell (7) und/oder das Unterkiefermodell (8) an einem winkelförmigen Bügel (41, 42) befestigt oder in einer Schale (61, 62) eingesetzt sind, die an dem Oberteil (3), an dessen Adapter (32) oder an einem mit diesem verbundenen Ansatzstück (45, 46) bzw. dem Zwischenstück (11) des Unterteils (4) des Traggestells (2) abgestützt sind, oder dass das Oberkiefermodell (7) und/oder das Unterkiefermodell (8) unmittelbar an dem Oberkiefer (3) bzw. dem Zwischenstück (10) des Unterteils (4) angebracht sind.
